# EUROPEAN PATENT SPECIFICATION

(11) **EP 1 223 126 B1**
(45) Date of publication and mention of the grant of the patent: **14.06.2006**
(21) Application number: 02000703.5
(22) Date of filing: 11.01.2002
(51) Int. Cl.: B65G 57/24, B65B 25/14, B65B 35/50, B65G 47/08

(54) **Method and machine for forming orderly groups of rolls of paper**
Verfahren und Maschine zum Bilden von geordneten Gruppen von Papierrollen
Méthode et appareil pour la formation de groupes ordonnés de rouleaux de papier

(30) Priority: 12.01.2001 IT TO010017
(43) Date of publication of application: 17.07.2002
(73) Proprietor: KPL Packaging S.p.A., 40033 Casalecchio di Reno (IT)
(72) Inventor: Cinotti, Andrea, 40141 Bologna (IT); Bonafe' Giorgio, 40033 Casalecchio di Reno (DE)
(74) Representative: Jorio, Paolo

(56) References cited:
- EP-A- 0 194 455
- CH-A- 343 290
- DE-B- 1 003 643
- US-A- 4 679 379
- US-A- 5 934 047

## Description

The present invention relates to a method of forming orderly groups of rolls of paper.

The present invention may be used to advantage, for example, for processing rolls of toilet tissue, to which the following description refers purely by way of example.

It is an object of the present invention to provide a method of forming groups of rolls of paper, which is cheap and easy to implement, and which at the same time provides for maximum flexibility as regards the number of rolls and the way in which the rolls are arranged in each group.

According to the present invention, there is provided a method of forming orderly groups of rolls of paper; each group comprising rolls arranged in a first number of superimposed layers; and each layer comprising a second number of side by side rows, each defined by a third number of rolls which is the same for all the rows; the method comprising the steps of predetermining a said first, second and third number from respective ranges; feeding the rolls in a first direction to a loading station to successively form, at the loading station, rows of rolls contacting one another in said first direction, each row being defined by the predetermined said third number of rolls; unloading said rows successively from said loading station in a second direction crosswise to the first to form, on a support, a succession of side by side rows, each comprising the predetermined said third number of rolls; successively unloading successive portions of said succession of rows off said support in said first direction, each said portion being defined by the predetermined said second number of rows, to form a succession of layers, each comprising the predetermined said second number of side by side rows; and feeding successive portions of said succession of layers in said first direction to stacking means, each said portion being defined by the predetermined said first number of layers to form a succession of said groups, each comprising the predetermined said first number of said superimposed layers.

In a preferred embodiment of the present invention, said rolls are fed to said loading station laid flat with respective longitudinal axes crosswise to said first direction, and are up-ended 90° to assume, on said support, a position in which said longitudinal axes are crosswise to said first and said second direction.

In this way, the further object is achieved of obtaining groups of relatively good mechanical strength and stable shape.

The present invention also relates to a machine for forming orderly groups of rolls of paper.

According to the present invention, there is provided a machine for forming groups of rolls of paper; each group comprising rolls arranged in a first number of superimposed layers; and each layer comprising a second number of side by side rows, each defined by a third number of rolls which is the same for all the rows; the machine comprising logic control means for predetermining a said first, second and third number from respective ranges; first conveying means for feeding the rolls in a first direction to a loading station to successively form, at the loading station, rows defined by the predetermined said third number of rolls contacting one another in said first direction; supporting means for supporting a number of said side by side rows, said supporting means being adjacent to said loading station; first push means for unloading said rows successively from said loading station in a second direction crosswise to the first to form, on said supporting means, a succession of side by side rows, each comprising the predetermined said third number of rolls; stacking means for stacking said layers one on top of the other; second conveying means extending in said first direction between said supporting means and said stacking means; and second push means for successively unloading successive portions of said succession of rows off said supporting means in said first direction, each said portion being defined by the predetermined said second number of rows to form, on said second conveying means, a succession of layers, each comprising the predetermined said second number of side by side rows.

A non-limiting embodiment of the present invention will be described by way of example with reference to the accompanying drawings, in which:
Figure 1 shows a schematic plan view of a preferred embodiment of the machine according to the present invention;
Figure 2 shows a schematic view in perspective of a first detail of the Figure 1 machine;
Figure 3 shows a schematic view in perspective of a second detail of the Figure 1 machine.

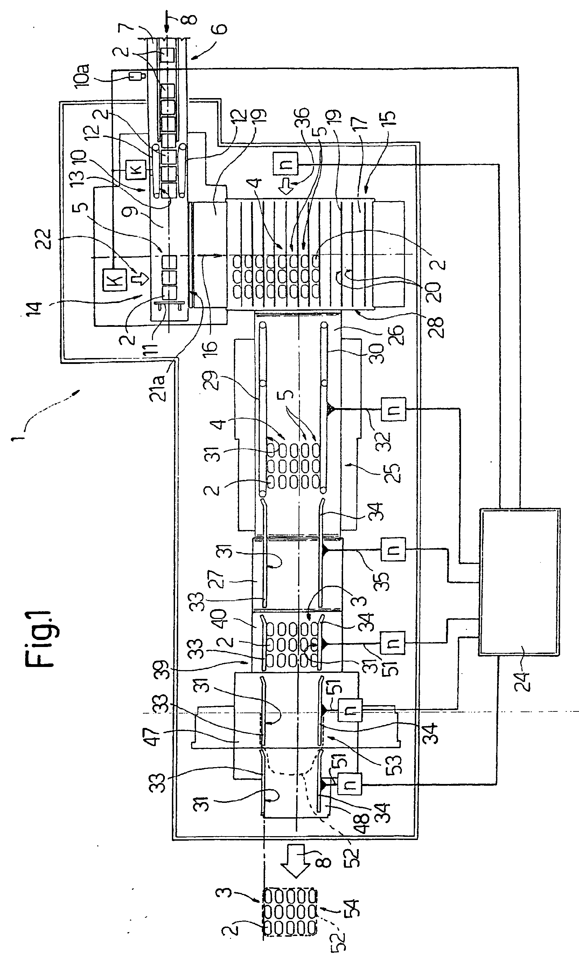

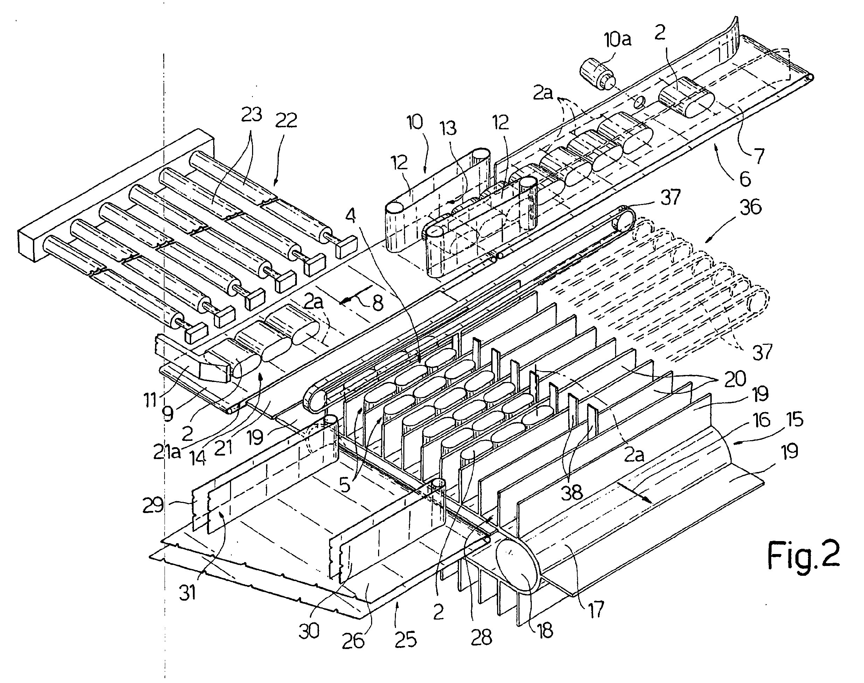

Number 1 in Figure 1 indicates as a whole a machine for forming rolls 2 of paper - in particular, rolls of toilet tissue having respective longitudinal axes 2a (Figure 2) - into groups 3, each defined by a number of rolls 2 arranged in a given adjustable h number of superimposed layers 4 and, in each layer 4, in a given adjustable n number of parallel, side by side rows 5, each comprising a given adjustable k number of rolls 2, which is the same for all of rows 5.

In connection with the above, it should be pointed out that the term "roll 2" is intended to mean both a single roll, and two or more side by side rolls enclosed in a single wrapping.

Machine 1 comprises an input feed unit 6 in turn comprising a conveyor 7 moving continuously and at a speed VI in a substantially horizontal direction 8, and for receiving a substantially random succession of rolls 2; an accelerating conveyor 9 in series with and downstream from conveyor 7 in direction 8, and moving at a speed V2 greater than VI; a grouping device 10 astride and over conveyors 7 and 9; and a stop device 11 at the output end of conveyor 9.

Grouping device 10 comprises two endless conveyors 12 located in planes perpendicular to the conveying surfaces of conveyors 7 and 9, and having two facing branches which are moved in steps in direction 8 and define, in between, a channel 13 extending over conveyors 7 and 9 in direction 8. Channel 13 has an input, the section of which is approximately equal to but no smaller than the section, crosswise to direction 8, of a roll 2 laid flat on conveyor 7; and an output, the section of which is approximately equal to but no larger than said section of roll 2.

Stop device 11 is defined by a transverse stop member located over an output portion of conveyor 9, and defines one end of a loading station 14 for loading a succession of rows 5 on to an up-ending pocket conveyor 15 extending in a substantially horizontal direction 16 perpendicular to direction 8. Up-ending conveyor 15 comprises a belt 17 looped about two pulleys 18 (only one shown) rotated in steps about respective axes parallel to direction 8; and a number of plates 19, each of which defines, with each adjacent plate 19, a pocket 20 extending crosswise to belt 17 and for receiving a respective row 5 in which rolls 2 are up-ended 90° with respect to the position of rolls 2 on conveyor 9. The width of each pocket 20 substantially equals a quarter of the circumference of each of pulleys 18, which are rotated in roughly 90° steps and are positioned so that the plane defined by their axes is coplanar with the conveying branch of conveyor 9, and so that, at the end of each step, a plate 19 is positioned both adjacent to a plate 21 (Figure 2) extending along a lateral output edge 21a of conveyor 9, and coplanar with the conveying branch of conveyor 9.

As shown in Figure 2, the rolls 2 in rows 5 arrested at loading station 14 are transferred to respective pockets 20 by a push device 22, which is located at loading station 14, on the opposite side of conveyor 9 to up-ending conveyor 15, and comprises a number of side by side actuators 23, each of which laterally engages and pushes a respective roll 2 on to a plate 19 arrested in front of loading station 14 and coplanar with the conveying branch of conveyor 9. Actuators 23 are equal in number to the maximum k number of rolls 2 in each row 5, and, as shown in Figure 1, can be activated selectively in any k number less than or equal to the maximum k number under the control of a central control unit 24.

As shown in Figure 1, a transfer device 25 for transferring layers 4 is located downstream from up-ending conveyor 15, and comprises two series conveyors 26 and 27 extending in direction 8. Conveyors 26 and 27 are operated in steps and have conveying branches coplanar with each other and with the conveying branch of belt 17. Conveyor 26 is interposed between conveyor 27 and a lateral output edge 28 of belt 17, and is associated with two lateral retaining conveyors 29 and 30, which extend along an initial portion of conveyor 26 and are operated simultaneously with conveyor 26. Conveyors 29 and 30 are located over conveyor 26, in planes perpendicular to the conveying surface of conveyor 26, and have two facing branches defining a conveying channel 31 of adjustable width. For which purpose, conveyor 29, upstream from conveyor 30 in direction 16, is transversely fixed, while conveyor 30 is movable transversely to and from conveyor 29 by an actuator 32 controlled by central control unit 24 as described later on.

Conveyor 27 and the end portion of conveyor 26 are associated with two lateral retaining walls 33 and 34, which are located over conveyors 26 and 27, in planes perpendicular to the conveying surfaces of conveyors 26 and 27, and face each other to define a portion of channel 31. Like conveyors 29 and 30, wall 33, upstream from wall 34 in direction 16, is fixed transversely in a position coplanar with the conveying surface of conveyor 29, while wall 34 is movable transversely to and from wall 33 by an actuator 35 controlled simultaneously with actuator 32 by central control unit 24.

As shown in Figure 2, the rows 5 of rolls 2 in pockets 20 of up-ending conveyor 15 are loaded on to transfer device 25 by a push device 36 located over up-ending conveyor 15 and comprising a number of side by side conveyor belts 37, each of which is fitted integrally with a pusher 38 which moves in direction 8 along the whole length of a respective pocket 20 to expel a respective row 5 from respective pocket 20 into channel 31 and on to an input portion of conveyor 26. Belts 37 are equal in number to the maximum n number of rows 5 in each layer 4, and can be activated selectively in any n number less than or equal to the maximum n number under the control (Figure 1) of central control unit 24, which adjusts the transverse position of conveyor 30 and wall 34 so that the width of channel 31 is always a function of the selected n number of rows 5.

In a variation not shown, pushers 38 are all connected to one belt and therefore activated simultaneously. Obviously, when n is less than the maximum n number, only the first n pushers 38, from the fixed geometric reference defined by conveyor 29 and wall 33, perform an actual work stroke, the other pushers 38 being no-load operated.

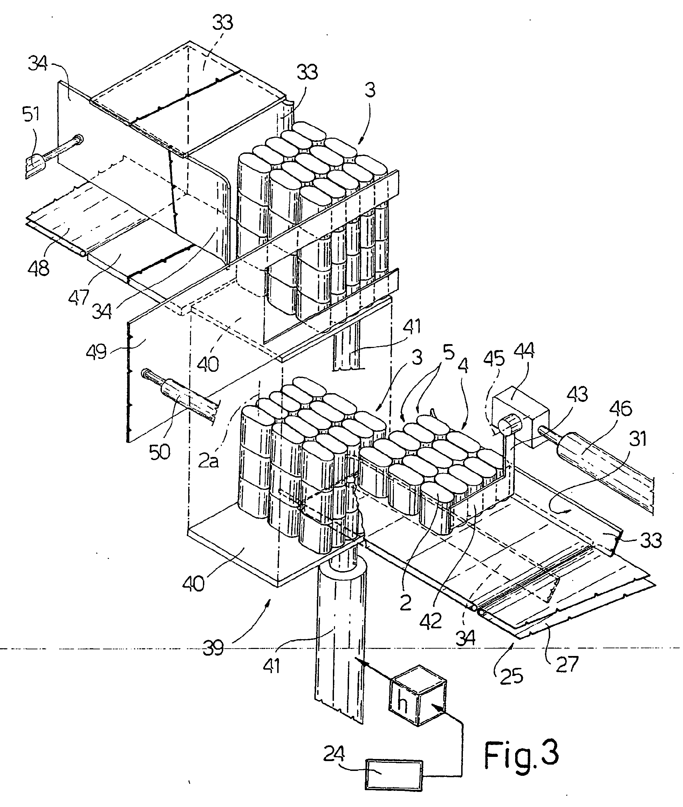

As shown in Figure 3, machine 1 comprises, immediately downstream from the output end of conveyor 27, a device 39 for forming groups 3, and which comprises a platform 40 moved vertically by an actuator 41. Actuator 41 moves platform 40 down in steps, of a length approximately equal to but no less than the height of an upright roll 2, from a start position in which platform 40 is coplanar with the conveying branch of conveyor 27, so as to load a given h number of layers 4, set by central control unit 24, successively on to platform 40. Layers 4 are fed successively on to platform 40 by a pusher 42 defined by the end portion of a right-angle crank 43 fitted to a block 44 to swing, with respect to block 44 and about an axis 45 parallel to direction 16, between a lowered work position in which crank 43 is perpendicular and adjacent to the conveying branches of conveyors 26 and 27, and a raised rest position in which crank 43 is parallel to the conveying branches of conveyors 26 and 27. An actuator 46 moves block 44 in direction 8 along the portion of channel 31 extending over conveyor 27, so that pusher 42, in the lowered work position, successively engages and feeds the layers 4 on conveyor 27 on to platform 40.

Actuator 41 also provides for lifting platform 40 into a raised unloading position in which platform 40 is coplanar with an unloading platform 47 interposed between device 39 and an unloading conveyor 48 for receiving the groups 3 unloaded off platform 40 by a pusher 49 moved back and forth in direction 8 by an actuator 50.

Platforms 40 and 47 and conveyor 48 are associated with respective pairs of lateral retaining walls 33 and 34 defining an output portion of channel 31. Walls 33, upstream from respective walls 34 in direction 16, are fixed transversely, while walls 34 are movable transversely to and from respective walls 33 by respective actuators 51 controlled by central control unit 24.

Before starting machine 1, the operator sets the desired k, n and h numbers on central control unit 24, the selection of which provides for producing groups 3 varying in size within the limits of machine 1.

In actual use, rolls 2, laid flat with their axes crosswise to direction 8, are fed by conveyor 7, in a substantially random sequence and at speed VI, to grouping device 10, which brakes and forms rolls 2 on conveyor 7 into a continuous succession in which rolls 2 are positioned contacting one another. The length of the continuous succession of rolls 2 is controlled by a sensor 10a, which, when the continuous succession reaches a given length, activates grouping device 10, the conveyors 12 of which are fed forward, under the control of central control unit 24, far enough tol unload on to conveyor 9 a succession of k rolls 2, which proceed at speed V2 towards loading station 14 and are arrested by stop device 11 to form a continuous row 5 of k rolls 2 in front of push device 22.

At this point, central control unit 24 activates the first k actuators 23 of push device 22 to transfer the newly formed row 5 from conveyor 9 on to a plate 19 of up-ending conveyor 15 arrested at loading station 14 and coplanar with the conveying branch of conveyor 9. As up-ending conveyor 15 moves forward one step, said plate 19 is raised into an upright position to form a pocket 20 housing the newly formed row 5, and at the same time upend rolls 2 through 90° so that rolls 2 are positioned inside pocket 20 with their axes 2a vertical and perpendicular to the conveying branch of belt 17, and are therefore much firmer in shape and more resistant to compression than in the laid-flat position on conveyor 7.

Once push device 22 performs the number of successive operating cycles, and up-ending conveyor 15 the corresponding number of operating steps, required to position n rows 5 facing and aligned with the input of channel 31, the width of which is set beforehand by central control unit 24 as a function of the total width of the n rows being considered, central control unit 24 activates push device 36 to only effect one complete turn (clockwise in Figure 2) of the n belts 37 facing the pockets 20 housing said n rows 5, and to move the respective pushers 38 along respective pockets 20 from a position upstream from up-ending conveyor 15 in direction 8.

Once unloaded off up-ending conveyor 15, each layer 4 is transferred by conveyor 26 to conveyor 27, which arrests it immediately upstream from device 39 for forming groups 3.

When a first layer 4 reaches the output end of conveyor 27, platform 40 of device 39 is maintained by actuator 41 in a loading position coplanar with the conveying branch of conveyor 27, so that, as pusher 42 moves along channel 31, leftwards in Figure 3, the first layer is fed on to platform 40. At this point, platform 40 performs a loading cycle in which it is dropped down in steps to successively load a further (h-1) layers 4 on top of the previously loaded first layer 4, and so form a complete group 3 on platform 40.

On completing the loading cycle, platform 40 is raised by actuator 41 into the unloading position coplanar with unloading platform 47.

At this point, group 3 in the unloading position can be unloaded off machine 1 in two ways. A first way is to position a bag 52, at a bagging station 53, with its mouth facing the output of the portion of channel 31 extending along unloading platform 47; and pusher 49 is fed forward to push group 3 off platform 40 into bag 52, and to push the full bag 52 on to unloading conveyor 48. A second way is to feed group 3 directly on to unloading conveyor 48, which then feeds group 3 to a pallet-loading station 54 at the output of machine 1.

As will be clear from the foregoing description, machine 1 is not only extremely flexible - by forming groups 3 varying in size from a minimum of one row 5 of two rolls 2, to a maximum of a maximum h number of layers 4, each defined by a maximum n number of rows 5, each defined by a maximum k number of rolls 2 - but also provides, by means of up-ending conveyor 15, for producing groups 3 of relatively firm shape.

## Claims

1. A method of forming orderly groups (3) of rolls (2) of paper; each group (3) comprising rolls (2) arranged in a first number (h) of superimposed layers (4); and each layer (4) comprising a second number (n) of side by side rows (5), each defined by a third number (k) of rolls (2) which is the same for all the rows (5); the method comprising the steps of predetermining a said first, second and third number (h, n, k) from respective ranges; feeding the rolls (2) in a first direction (8) to a loading station (14) to successively form, at the loading station (14), rows (5) of rolls (2) contacting one another in said first direction (8), each row (5) being defined by the predetermined said third number (k) of rolls (2); unloading said rows (5) successively from said loading station (14) in a second direction (16) crosswise to the first to form, on a support (15), a succession of side by side rows (5), each comprising the predetermined said third number (k) of rolls (2); successively unloading successive portions of said succession of rows (5) off said support (15) in said first direction (8), each said portion being defined by the predetermined said second number (n) of rows (5), to form a succession of layers (4), each comprising the predetermined said second number (n) of side by side rows (5); and feeding successive portions of said succession of layers (4) in said first direction (8) to stacking means (39), each said portion being defined by the predetermined said first number (h) of layers (4) to form a succession of said groups (3), each comprising the predetermined said first number (h) of said superimposed layers (4).

2. A method as claimed in Claim 1, wherein said rolls (2) are fed to said loading station (14) laid flat with respective longitudinal axes (2a) crosswise to said first direction (8), and are up-ended 90° to assume, on said support (15), a position in which said longitudinal axes (2a) are crosswise to said first and said second direction (8, 16).

3. A method as claimed in Claim 1 or 2, wherein, downstream from said support (15), said rolls (2) are fed along a channel (31) adjustable in width and extending in said first direction (8) through said stacking means (39); said width being preset together with said second number (n) and as a function of the value of the predetermined said second number (n).

4. A method as claimed in one of the foregoing Claims, wherein, when the predetermined said first number (h) is greater than one, each said group (3) is formed, at said stacking means (39), by feeding a first layer (4) on to a platform (40); moving said platform (40) in a direction parallel to the longitudinal axes (2a) of the rolls (2) in said first layer (4) and in steps of a length at least equal to a longitudinal length of said rolls (2); and feeding a further said layer (4) on to said platform (40) at the end of each said step.

5. A method as claimed in any one of the foregoing Claims, wherein each said group (3) is unloaded off said stacking means (39) and bagged.

6. A method as claimed in any one of Claims 1 to 4, wherein each said group (3) is unloaded off said stacking means (39) and loaded on to a pallet.

7. A machine for forming groups (3) of rolls (2) of paper; each group (3) comprising rolls (2) arranged in a first number (h) of superimposed layers (4); and each layer (4) comprising a second number (n) of side by side rows (5), each defined by a third number (k) of rolls (2) which is the same for all the rows (5); the machine (1) comprising logic control means (24) for predetermining a said first, second and third number (h, n, k) from respective ranges; first conveying means (6, 10) for feeding the rolls (2) in a first direction (8) to a loading station (14) to successively form, at the loading station (14), rows (5) defined by the predetermined said third number (k) of rolls (22) contacting one another in said first direction (8); supporting means (15) for supporting a number of said side by side rows (5), said supporting means (15) being adjacent to said loading station (14); first push means (22) for unloading said rows (5) successively from said loading station (14) in a second direction (16) crosswise to the first to form, on said supporting means (15), a succession of side by side rows (5), each comprising the predetermined said third number (k) of rolls (2); stacking means (39) for stacking said layers (4) one on top of the other; second conveying means (25) extending in said first direction (8) between said supporting means (15) and said stacking means (39); and second push means (36) for successively unloading successive portions of said succession of rows (5) off said supporting means (15) in said first direction (8), each said portion being defined by the predetermined said second number (n) of rows (5) to form, on said second conveying means (25), a succession of layers (4), each comprising the predetermined said second number (n) of side by side rows (5).

8. A machine as claimed in Claim 7, wherein said first push means (22) comprise a number of actuators (23) movable through said loading station (14) in said second direction (16) and activated selectively, under the control of said logic control means (24), to engage respective said rolls (2) in said loading station (14) and feed them on to said supporting means (15).

9. A machine as claimed in Claim 7 or 8, wherein said supporting means (15) comprise an up-ending conveyor (15) having pockets (20), and which is movable in steps in said second direction (16) to successively receive said rows (5) and to position the rolls (2) in said rows with their respective longitudinal axes (2a) crosswise to said first and said second direction (8, 16).

10. A machine as claimed in Claim 9, wherein said up-ending conveyor (15) comprises an endless belt (17), and a number of plates (19) parallel to said first direction (8) and extending transversely from said belt (17); each pair of adjacent said plates (19) defining a respective said pocket (20) extending in said first direction (8).

11. A machine as claimed in Claim 10, wherein said second push means (36) comprise a number of pushers (38), each of which is movable in said first direction (8) along a respective said pocket (20), and is activated selectively, under the control of said logic control means (24), to engage and feed a respective said row (5) on to said second conveying means (25).

12. A machine as claimed in one of Claims 7 to 11, wherein said second conveying means (25) define a channel (31) adjustable in width and extending in said first direction (8) through said stacking means (39).

13. A machine as claimed in Claim 12, wherein said channel (31) comprises first (29, 33) and second (30, 34) lateral retaining wall means facing each other and movable, under the control of said logic control means (24), with respect to each other in said second direction (16) to adjust the width of the channel (31) as a function of the value of the predetermined said second number (n).

14. A machine as claimed in one of Claims 7 to 13, wherein said stacking means (39) comprise a platform (40) for receiving a said layer (4); and actuating means (41) for moving said platform (40) in a third direction crosswise to said first and second direction (8, 16) and in steps of a length at least equal to a longitudinal length of said rolls (2).

15. A machine as claimed in any one of Claims 7 to 14, and comprising a bagging station (53) for bagging said groups (3) and located downstream from said stacking means (39) in said first direction (8).

16. A machine as claimed in any one of Claims 7 to 14, and comprising a pallet-loading station (54) for loading said groups (3) on to pallets and located downstream from said stacking means (39) in said first direction (8).

## Patentansprüche

1. Verfahren zum Bilden von geordneten Gruppen (3) von Rollen (2) aus Papier, wobei jede Gruppe (3) in einer ersten Anzahl (h) übereinander liegender Lagen (4) angeordnete Rollen (2) umfasst und jede Lage (4) eine zweite Anzahl (n) nebeneinander liegender Reihen (5) umfasst, die jeweils durch eine dritte Anzahl (k) von Rollen (2) ausgebildet werden, die für alle Reihen (5) gleich ist, wobei das Verfahren die Schritte des Vorbestimmens einer ersten, zweiten und dritten Anzahl (h, n, k) aus jeweiligen Bereichen; des Befördems der Rollen (2) in eine erste Richtung (8) zu einer Ladestation (14), um nacheinander an der Ladestation (14) Reihen (5) von Rollen (2) zu bilden, die einander in der ersten Richtung (8) berühren, wobei jede Reihe (5) durch die vorbestimmte dritte Anzahl (k) von Rollen (2) ausgebildet wird; des Entladens der Reihen (5) nacheinander von der Ladestation (14) in eine zweite Richtung (16) quer zur ersten, um auf einem Träger (15) eine Folge von nebeneinander liegenden Reihen (5) zu bilden, wobei jede die vorbestimmte dritte Anzahl (k) von Rollen (2) umfasst; des Entladens aufeinander folgender Teile der Folge von Reihen (5) nacheinander von dem Träger (15) in die erste Richtung (8), wobei jeder Teil durch die vorbestimmte zweite Anzahl (n) von Reihen (5) ausgebildet wird, um eine Folge von Lagen (4) zu bilden, die jeweils die vorbestimmte zweite Anzahl (n) von nebeneinander liegenden Reihen (5) umfassen; und des Beförderns der aufeinander folgenden Teile der Folge von Lagen (4) in die erste Richtung (8) zu den Stapelmitteln (39), wobei jeder Teil durch die vorbestimmte erste Anzahl (h) von Lagen (4) ausgebildet wird, um eine Folge der Gruppen (3) zu bilden, wobei jede die vorbestimmte erste Anzahl (h) von übereinander liegenden Lagen (4) umfasst.

2. Verfahren nach Anspruch 1, **dadurch gekennzeichnet, dass** die Rollen (2) der Ladestation (14) flach gelegt mit den jeweiligen Längsachsen (2a) quer zur ersten Richtung (8) zugeführt werden und um 90° aufgerichtet werden, um auf dem Träger (15) eine Stellung einzunehmen, in der die Längsachsen (2a) quer zu der ersten und der zweiten Richtung (8, 16) sind.

3. Verfahren nach Anspruch 1 oder 2, **dadurch gekennzeichnet, dass** stromabwärts des Trägers (15) die Rollen (2) entlang eines Kanals (31), der in der Breite verstellbar ist und sich in erster Richtung (8) durch die Stapelmittel (39) erstreckt, befördert werden, wobei die Breite zusammen mit der zweiten Anzahl (n) und als Funktion des Werts der vorbestimmten zweiten Anzahl (n) voreingestellt wird.

4. Verfahren nach einem der vorstehenden Ansprüche, **dadurch gekennzeichnet, dass**, wenn die vorbestimmte erste Anzahl (h) größer als eins ist, jede Gruppe (3) an den Stapelmitteln (39) durch Befördern einer ersten Lage (4) auf eine Bühne (40), Bewegen der Bühne (40) in eine Richtung parallel zu den Längsachsen (2a) der Rollen (2) in der ersten Lage (4) und in Schritten einer Länge mindestens gleich einer Länge der Rollen (2) in Längsrichtung und Befördern einer weiteren Lage (4) auf die Bühne (40) am Ende jedes Schritts gebildet wird.

5. Verfahren nach einem der vorstehenden Ansprüche, **dadurch gekennzeichnet, dass** jede Gruppe (3) von den Stapelmitteln (39) abgeladen und eingesackt wird.

6. Verfahren nach einem der Ansprüche 1 bis 4, **dadurch gekennzeichnet, dass** jede Gruppe (3) von den Stapelmittein (39) abgeladen und auf eine Palette geladen wird.

7. Maschine zum Bilden von Gruppen (3) von Rollen (2) aus Papier, wobei jede Gruppe (3) in einer ersten Anzahl (h) übereinander liegender Lagen (4) angeordnete Rollen (2) umfasst und jede Lage (4) eine zweite Anzahl (n) nebeneinander liegender Reihen (5) umfasst, die jeweils durch eine dritte Anzahl (k) von Rollen (2) ausgebildet werden, die für alle Reihen (5) gleich ist, wobei die Maschine (1) umfasst: Logiksteuermittel (24) zum Vorbestimmen einer ersten, zweiten und dritten Anzahl (h, n, k) aus jeweiligen Bereichen; erste Fördermittel (6, 10) für das Befördern der Rollen (2) in eine erste Richtung (8) zu einer Ladestation (14), um nacheinander an der Ladestation (14) durch die vorbestimmte dritte Anzahl (k) von Rollen (2), die einander in der ersten Richtung (8) berühren, ausgebildete Reihen (5) zu bilden; Tragmittel (15) für das Tragen einer Anzahl von nebeneinander liegenden Reihen (5), wobei die Tragmittel (15) sich neben der Ladestation (14) befinden; erste Schiebemittel (22) für das Entladen der Reihen (5) nacheinander von der Ladestation (14) in eine zweite Richtung (16) quer zur ersten, um auf den Tragmitteln (15) eine Folge von nebeneinander liegenden Reihen (5) zu bilden, wobei jede die vorbestimmte dritte Anzahl (k) von Rollen (2) umfasst; Stapelmittel (39) zum Stapeln der Lagen (4) aufeinander; zweite Fördermittel (25), die sich in die erste Richtung (8) zwischen den Tragmitteln (15) und den Stapelmitteln (39) erstrecken; und zweite Schiebemittel (36) zum Entladen aufeinander folgender Teile der Folge von Reihen (5) nacheinander von den Tragmittein (15) in die erste Richtung (8), wobei jeder Teil durch die vorbestimmte zweite Anzahl (n) von Reihen (5) ausgebildet wird, um an den zweiten Fördermitteln (25) eine Folge von Lagen (4) zu bilden, die jeweils die vorbestimmte zweite Anzahl (n) von nebeneinander liegenden Reihen (5) umfassen.

8. Maschine nach Anspruch 7, **dadurch gekennzeichnet, dass** die ersten Schiebemittel (22) eine Anzahl von Aktoren (23) umfassen, die durch die Ladestation (14) in die zweite Richtung (16) bewegbar sind und gezielt unter der Steuerung des Logiksteuermittels (24) betätigt werden, um die jeweiligen Rollen (2) in der Ladestation (14) zu greifen und sie auf die Tragmittel (15) zu befördern.

9. Maschine nach Anspruch 7 oder 8, **dadurch gekennzeichnet, dass** die Tragmittel (15) eine Aufrichtfördereinrichtung (15), die Taschen (20) aufweist und schrittweise in die zweite Richtung (16) bewegbar ist, um nacheinander Reihen (5) entgegenzunehmen und die Rollen (2) in den Reihen mit ihren jeweiligen Längsachsen (2a) quer zu der ersten und der zweiten Richtung (8, 16) zu positionieren, umfassen.

10. Maschine nach Anspruch 9, **dadurch gekennzeichnet, dass** die Aufrichtfördereinrichtung (15) einen Endlosriemen (17) und eine Anzahl von Platten (19), die parallel zur ersten Richtung (8) sind und sich von dem Riemen (17) in Querrichtung erstrecken, umfasst, wobei jedes Paar benachbarter Platten (19) eine jeweilige Tasche (20) ausbildet, die sich in die erste Richtung (8) erstreckt.

11. Maschine nach Anspruch 10, **dadurch gekennzeichnet, dass** die zweiten Schiebemittel (36) eine Anzahl von Schiebern (38) umfassen, die jeweils in die erste Richtung (8) entlang einer jeweiligen Tasche (20) bewegbar sind und gezielt unter der Steuerung des Logiksteuermittels (24) betätigt werden, um eine jeweilige Reihe (5) zu greifen und auf die zweiten Fördermittel (25) zu befördern.

12. Maschine nach einem der Ansprüche 7 bis 11, **dadurch gekennzeichnet, dass** die zweiten Fördermittel (25) einen Kanal (31) ausbilden, der in der Breite verstellbar ist und sich in die erste Richtung (8) durch die Stapelmittel (39) erstreckt.

13. Maschine nach Anspruch 12, **dadurch gekennzeichnet, dass** der Kanal (31) erste (29, 33) und zweite (30, 34) seitliche Haltewandmittel umfasst, die einander zugewandt sind und unter der Steuerung des Logiksteuermittels (24) im Verhältnis zueinander in der zweiten Richtung (16) bewegbar sind, um die Breite des Kanals (31) als Funktion des Werts der vorbestimmten zweiten Anzahl (n) zu verändern.

14. Maschine nach einem der Ansprüche 7 bis 13, **dadurch gekennzeichnet, dass** die Stapelmittel (39) eine Bühne (40) zum Entgegennehmen einer Lage (4) und Betätigungsmittel (41) zum Bewegen der Bühne (40) in eine dritte Richtung quer zur ersten und zur zweiten Richtung (8, 16) und in Schritten einer Länge mindestens gleich einer Länge der Rollen (2) in Längsrichtung umfassen.

15. Maschine nach einem der Ansprüche 7 bis 14, welche eine Einsackstation (53) zum Einsacken der Gruppen (3) umfasst, die stromabwärts der Stapelmittel (39) in der ersten Richtung (8) angeordnet ist.

16. Maschine nach einem der Ansprüche 7 bis 14, welche eine Palettenladestation (54) zum Laden der Gruppen (3) auf Paletten umfasst, die stromabwärts der Stapelmittel (39) in der ersten Richtung (8) angeordnet ist.

## Revendications

1. Procédé de formation de groupes ordonnés (3) de rouleaux (2) de papier ; chaque groupe (3) comportant des rouleaux (2) agencés selon un premier nombre (h) de couches superposées (4) ; et chaque couche (4) comportant un deuxième nombre (n) de rangées côte à côte (5), chacune étant définie par un troisième nombre (k) de rouleaux (2) qui est le même pour toutes les rangées (5) ; le procédé comportant les étapes consistant à prédéterminer un dit premier, deuxième et troisième nombre (h, n, k) à partir de plages respectives ; acheminer les rouleaux (2) dans une première direction (8) vers un poste de chargement (14) pour former successivement, au poste de chargement (14), des rangées (5) de rouleaux (2) en contact les uns avec les autres dans ladite première direction (8), chaque rangée (5) étant définie par ledit troisième nombre prédéterminé (k) de rouleaux (2) ; décharger lesdites rangées (5) successivement à partir du poste de chargement (14) dans une deuxième direction (16) transversale par rapport à la première pour former, sur un support (15), une succession de rangées côte à côte (5), chacune comportant ledit troisième nombre prédéterminé (k) de rouleaux (2) ; décharger successivement des parties successives de ladite succession de rangées (5) dudit support (15) dans ladite première direction (8), chaque dite partie étant définie par ledit deuxième nombre prédéterminé (n) de rangées (5), pour former une succession de couches (4), chacune comportant ledit deuxième nombre prédéterminé (n) de rangées côte à côte (5) ; et acheminer des parties successives de ladite succession de couches (4) dans ladite première direction (8) vers des moyens d'empilage (39), chaque dite partie étant définie par ledit premier nombre prédéterminé (h) de couches (4) pour former une succession dedits groupes (3), chacun comportant ledit premier nombre prédéterminé (h) dedites couches superposées (4).

2. Procédé selon la revendication 1, dans lequel lesdits rouleaux (2) sont acheminés vers ledit poste de chargement (14) en étant disposés à plat, les axes longitudinaux respectifs (2a) étant transversaux par rapport à ladite première direction (8), et sont tournés de 90° pour prendre, sur ledit support (15), une position dans laquelle lesdits axes longitudinaux (2a) sont transversaux par rapport à ladite première et ladite deuxième direction (8, 16).

3. Procédé selon la revendication 1 ou 2, dans lequel en aval dudit support (15), lesdits rouleaux (2) sont acheminés le long d'un canal (31) ajustable en largeur et s'étendant dans ladite première direction (8) à travers lesdits moyens d'empilage (39) ; ladite largeur étant prédéfinie en même temps que ledit deuxième nombre (n) et en fonction de la valeur dudit deuxième nombre (n) prédéterminé.

4. Procédé selon l'une quelconque des revendications précédentes, dans lequel, lorsque ledit premier nombre prédéterminé (h) est plus grand que un, chaque dit groupe (3) est formé, auxdits moyens d'empilage (39), en acheminant une première couche (4) sur une plate-forme (40) ; en déplaçant ladite plate-forme (40) dans une direction parallèle aux axes longitudinaux (2a) des rouleaux (2) de ladite première couche (4) et par étapes d'une longueur au moins égale à une longueur longitudinale desdits rouleaux (2) ; et en acheminant une autre dite couche (4) sur ladite plate-forme (40) à la fin de chaque dite étape.

5. Procédé selon l'une quelconque des revendications précédentes, dans lequel chaque dit groupe (3) est déchargé desdits moyens d'empilage (39) et empaqueté.

6. Procédé selon l'une quelconque des revendications 1 à 4, dans lequel chaque dit groupe (3) est déchargé desdits moyens d'empilage (39) et chargé sur une palette.

7. Machine pour former des groupes (3) de rouleaux (2) de papier ; chaque groupe (3) comportant des rouleaux (2) agencés selon un premier nombre (h) de couches superposées (4) ; et chaque couche (4) comportant un deuxième nombre (n) de rangées côte à côte (5), chacune étant définie par un troisième nombre (k) de rouleaux (2) qui est le même pour toutes les rangées (5) ; la machine (1) comportant des moyens de commande logique (24) pour déterminer un dit premier, deuxième et troisième nombre (h, n, k) à partir de plages respectives ; des premiers moyens de transport (6, 10) pour acheminer les rouleaux (2) dans une première direction (8) jusqu'à un poste de chargement (14) pour former successivement, au poste de chargement (14), des rangées (5) définies par ledit troisième nombre prédéterminé (k) de rouleaux (2) en contact les uns avec les autres dans ladite première direction (8) ; des moyens de support (15) pour supporter un nombre desdites rangées côte à côte (5), lesdits moyens de support (15) étant adjacents audit poste de chargement (14) ; des premiers moyens de poussée (22) pour décharger lesdites rangées (5) successivement à partir dudit poste de chargement (14) dans une deuxième direction (16) transversale par rapport à la première pour former, sur lesdits moyens de support (15), une succession de rangées côte à côte (5), comportant chacune ledit troisième nombre prédéterminé (k) de rouleaux (2) ; des moyens d'empilage (39) pour empiler lesdites couches (4) l'une au-dessus de l'autre ; des seconds moyens de transport (25) s'étendant dans ladite première direction (8) entre lesdits moyens de support (15) et lesdits moyens d'empilage (39) ; et des seconds moyens de poussée (36) pour décharger successivement des parties successives de ladite succession de rangées (5) à partir desdits moyens de support (15) dans ladite première direction (8), chaque dite partie étant définie par ledit deuxième nombre prédéterminé (n) de rangées (5) pour former, sur lesdits seconds moyens de transport (25), une succession de couches (4), comportant chacune ledit deuxième nombre prédéterminé (n) de rangées côte à côte (5).

8. Machine selon la revendication 7, dans laquelle lesdits premiers moyens de poussée (22) comportent un certain nombre d'actionneurs (23) mobiles à travers ledit poste de chargement (14) dans ladite deuxième direction (16) et activés sélectivement, sous la commande desdits moyens de commande logique (24), pour coopérer avec lesdits rouleaux respectifs (2) situés dans ledit poste de chargement (14) et les acheminer jusque sur lesdits moyens de support (15).

9. Machine selon la revendication 7 ou 8, dans laquelle lesdits moyens de support (15) comportent un convoyeur redresseur (15) ayant des poches (20), et qui est mobile par étapes dans ladite deuxième direction (16) pour recevoir successivement lesdites rangées (5) et positionner les rouleaux (2) desdites rangées pour qu'ils aient leurs axes longitudinaux respectifs (2a) transversaux par rapport à ladite première et ladite deuxième direction (8, 16).

10. Machine selon la revendication 9, dans laquelle ledit convoyeur redresseur (15) comporte une courroie sans fin (17), et plusieurs plaques (19) parallèles à ladite première direction (8) et s'étendant transversalement par rapport à ladite courroie (17), chaque paire desdites plaques adjacentes (19) définissant une dite poche respective (20) s'étendant dans ladite première direction (8).

11. Machine selon la revendication 10, dans laquelle lesdits seconds moyens de poussée (36) comportent plusieurs poussoirs (38), dont chacun est mobile dans ladite première direction (8) le long d'une dite poche respective (20), et est actionné sélectivement, sous la commande desdits moyens de commande logique (24), pour coopérer avec une dite rangée respective (5) et l'acheminer jusque sur lesdits seconds moyens de transport (25).

12. Machine selon l'une quelconque des revendications 7 à 11, dans laquelle lesdits seconds moyens de transport (25) définissent un canal (31) ajustable en largeur et s'étendant dans ladite première direction (8) à travers lesdits moyens d'empilage (39).

13. Machine selon la revendication 12, dans laquelle ledit canal (31) comporte des premiers (29, 33) et des seconds (30, 34) moyens de paroi de retenue latérale en vis-à-vis les uns des autres et mobiles, sous la commande desdits moyens de commande logique (24) les uns par rapport aux autres dans ladite deuxième direction (16) pour ajuster la largeur du canal (31) en fonction de la valeur dudit deuxième nombre prédéterminé (n).

14. Machine selon l'une quelconque des revendications 7 à 13, dans laquelle lesdits moyens d'empilage (39) comportent une plate-forme (40) pour recevoir une dite couche (4), et des moyens d'actionnement (41) pour déplacer ladite plate-forme (40) dans une troisième direction transversale par rapport auxdites première et deuxième directions (8, 16) et par étapes d'une longueur au moins égale à une longueur longitudinale desdits rouleaux (2).

15. Machine selon l'une quelconque des revendications 7 à 14, et comportant un poste d'emballage (53) pour emballer lesdits groupes (3) et positionné en aval desdits moyens d'empilage (39) dans ladite première direction (8).

16. Machine selon l'une quelconque des revendications 7 à 14, et comportant un poste de chargement sur palette (54) pour charger lesdits groupes (3) sur des palettes et positionné en aval desdits moyens d'empilage (39) dans ladite première direction (8).
